# EUROPEAN PATENT SPECIFICATION

(11) **EP 1 096 795 B1**
(45) Date of publication and mention of the grant of the patent: **02.06.2004**
(21) Application number: 01101344.8
(22) Date of filing: 17.12.1997
(51) Int. Cl.: H04N 5/913

(54) **Control of consumer recording equipment**
Aufnahmeanlagensteuerung
Commande d'équipement d'enregistrement de consommateur

(30) Priority: 20.12.1996 GB 9626574
(43) Date of publication of application: 02.05.2001
(62) Divisional of application: 97953177.9
(73) Proprietor: THOMSON CONSUMER ELECTRONICS, INC., Indianapolis, IN 46290-1024 (US)
(72) Inventor: Blatter, Harold, Indianapolis, IN 46260 (US)
(74) Representative: Kohrs, Martin

(56) References cited:
- EP-A- 0 498 617
- EP-A- 0 574 892
- EP-A- 0 701 374
- EP-A- 0 717 564

## Description

### BACKGROUND OF THE INVENTION

The advent of digitally compressed audio and video transmission systems, such as the Grand Alliance HDTV system for terrestrial high definition television broadcasting, or the DirecTV™ direct broadcast satellite TV system currently employing the NTSC system, demonstrate that virtually studio quality audio and video signals can be delivered to a viewing audience. However, such exemplary quality signals are instantly degraded when time shifted for later viewing by means of currently available consumer analog recording formats, for example, VHS, S-VHS, 8 mm and Hi 8.

The introduction of consumer quality digital video recording cameras, for example DVC, demonstrates that consumer quality digital recording may yield sound and picture quality virtually indistinguishable from the original material. Other consumer products are emerging, for example, D-VHS, video disc, DVD, digital cameras, scanners and computers with digital processing capabilities which permit multiple generation digital signal dubbing, copying, replicating or editing, with sound and picture quality remaining essentially equal to that of the original recorded source. The high levels of technical quality and performance delivered by such consumer digital equipment raises concern with respect to copyright infringement by unauthorized copying. Proposed legislation in the form of the "VIDEO HOME RECORDING ACT of 1996" requires that digital audio/video signals include copy protection information to allow the copyright owner to determine and control the audience size viewing the copyrighted material. Implementation of copy protection requires that copy control information be included with or within the copyrighted material and be maintained throughout subsequent processing procedures. In addition such copy control information may be amended as a result of subsequent processing to retain control the copyright owner's intellectual property. A digital recording device is disclosed in EP A 0 498 617 which extracts copy control data from an input data stream to control recording and to amend copy control data subsequent to recording. A further digital recording device is disclosed in EP 0 717 564 which accepts an MPEG bit stream containing a PES header which includes copyright and copy control data. The recording device decodes and decrypts copy prevention information and in response thereto encrypts the bit stream for recording. A second embodiment disclosed in EP 0 574 892 is directed to copy control by means of information superimposed in one horizontal period of the vertical blanking interval of an analog video signal.

### SUMMARY OF THE INVENTION

In an inventive arrangement, an apparatus processes a source of compressed digital audio, video and control data occurring in transport packets. The apparatus comprises a deriving means responsive to the source for deriving copy control data from the transport packets and an enabling means responsive to the copy control data for enabling coupling of said transport packets to a data bus for transmission and copying, wherein in a first condition said copy control data is representative of copying permitted and coupling of said transport packets to said bus is enabled, and in a second condition said copy control data is representative of copying prohibited and coupling of said transport packets to said bus is disabled.

In a further inventive arrangement, copy control data is representative of copying permitted and the control means disables transport packet signal decoding.

In another inventive arrangement, control means are coupled to the bus for determining an apparatus presence at a destination on said bus and responsive to said copy control data, controlling coupling of the transport packets to the destination. When the copy control data is representative of copying prohibited and, in a first condition the control means determines a presence of a replicating apparatus at the destination, said control means inhibits coupling of the transport packets to the destination. When in a second condition the control means determines an absence of the replicating apparatus, said control means enables coupling of the transport packets to the destination.

### BRIEF DESCRIPTION OF THE DRAWINGS

FIGURE 1 illustrates an exemplary digital receiver and digital replicator employing various inventive arrangements.
FIGURE 2A and 2B illustrate inventive arrangements for bus communication employing a superpacket.
FIGURES 3A and 3B illustrate exemplary bus connected digital sources and replication systems including inventive arrangements.
FIGURE 4 illustrates an exemplary digital signal source and analog replication device including inventive arrangements.

### DETAILED DESCRIPTION

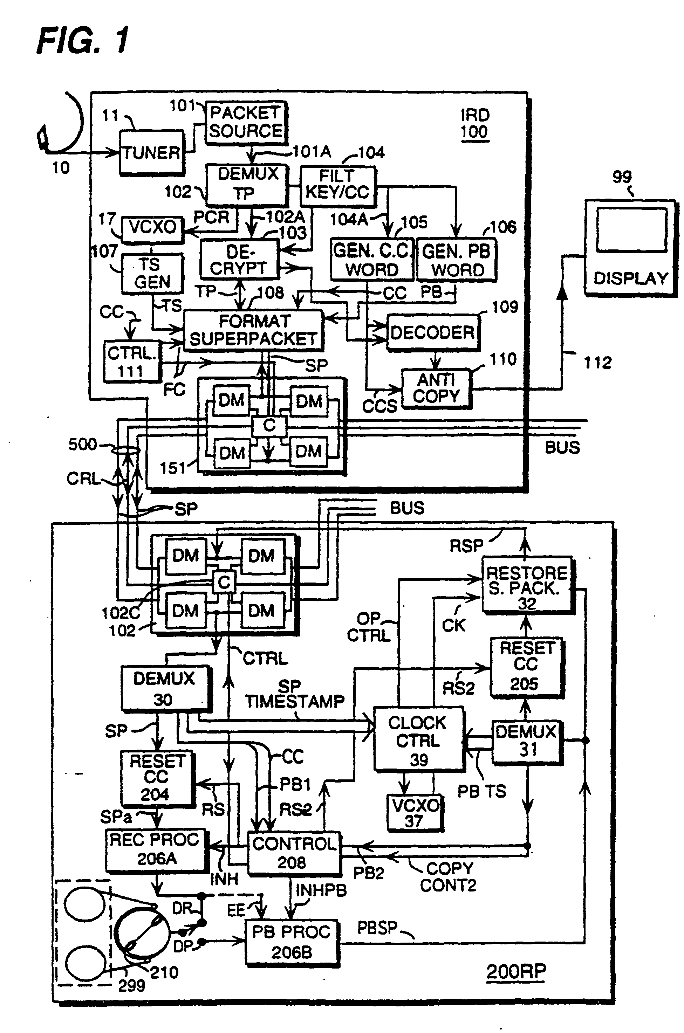

The Grand Alliance HDTV terrestrial system and the DirecTV™ system utilize an MPEG standard and an MPEG like standard respectively to transmit program material in transport packets. The transport packets may contain multiple programs which are multiplexed together and processed for transmission. At the receiver error correction is performed and a user determined program packet stream is separated and assembled from the multiplexed mixture of programs. The burgeoning array of consumer digital audio and video products, computers, imaging apparatus etc. necessitated a simple, low cost means for interconnection. For example, a serial data bus has been standardized by the IEEE and is known as 1394. The 1394 standard multiplexes a variety of compressed digital audio, video, MIDI and device control commands onto two twisted pair conductors. A third conductor pair provides one conductor for power supply ground with the second conductor providing an optional coupling for power insertion or extraction. Devices may be interconnected in a daisy chain manner by a small, thin, flexible cable terminated with standardized connectors. An example of a simplified bus is depicted in the block diagram of FIGURE 1. The simplified bus provides coupling of serial digital audio, video and control transport packet streams and is described in documents EP-A-0 701 374, EP-A-0 832 536 and EP-A-0 832 535.

However, a simplified description of the system depicted in FIGURE 1 is as follows. An integrated receiver decoder or IRD 100, receives a radio frequency signal from, for example, antenna 10 or a cable source, not shown. The radio frequency signal is tuned by tuner 11 to receive a user selected program. The tuner output signal is coupled to packet source block 101, which demodulates and error corrects the modulated transmission signal. An output from packet source 101 is coupled to block 102 which demultipexes or separates the user's selected program transport stream TP from other program streams present in the received packet stream. The user selected transport stream TP may be coupled for MPEG decoding by decoder 109 which generates audio and video signals for display 110.

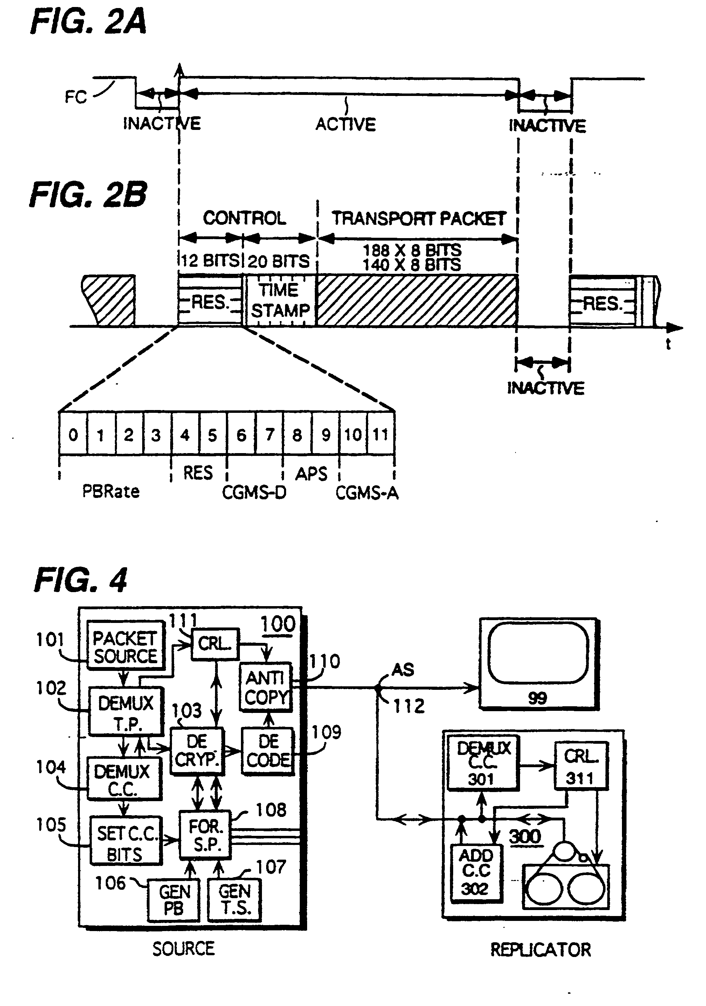

The demultiplexed user selected program transport stream TP may be formatted at block 108, for example as a superpacket, as illustrated in FIGURE 2B. A superpacket comprises the user selected transport stream packets TP and a control data header. FIGURE 2B shows an exemplary control data header of 32 bits which includes a time stamp TS, copy control data bits, bits which may determine recorder play back rate, and two bits reserved for future usage. The superpacket SP is coupled via an audio, video and data bus 500 to a recording or replicating device 200. Data bus 500 is received by interface port 102 and coupled to demux 30 which reads the exemplary control data. The copy control data bits may assert a number of possible control conditions, for example, unlimited copying, single copy replication or copying prohibited. Thus to achieve the required control conditions, the copy control data bits are coupled to controller 208 which is controllably coupled to various replicator sub-systems. A detailed description of the various control aspects resulting from the copy control conditions is provided later.

Superpackets SP or SPa are coupled for recording, replication or copying processing at block 206A. The superpackets may be processed for error detection and correction and may also be transformed to modify their spectral energy content. An output signal stream from block 206A is coupled to form copy 210 on medium 299, for example a magnetizable surface. When recorder 200 is operated in a reproduction mode, copy 210 is transduced from medium 299 and coupled to playback processor 206B. Playback processor 206B essentially reverses any record signal encoding and may detect and correct errors in copy 210 resulting from the recording medium 299. The error corrected signal PBSP is coupled to demultiplexor 31 and superpacket restorer 32. The control data header of the play back superpacket PBSP is read by demultiplexor 31 and coupled to various locations. The time stamp PBTS from the header is coupled to clock controller 39 where the time stamp value is employed to determine the output packet timing or initiation of an output superpacket RSP from block 32. The replayed, restored superpacket RSP is coupled to interface 102 for transmission to integrated receiver decoder IRD 100 via AVD bus 500.

It is assumed that the signal to be communicated is provided in the form of transport packets such as defined in the system layer of the MPEG2 video standard, or the transport layer of the Grand Alliance signal format. In both the MPEG2 video standard and the transport layer of the Grand Alliance signal format, transport packets are associated with timestamps or PCRs which allow re-synchronization of local system clocks to the original encoder clock frequency. Hence, having synchronized the local system clock generator, the transport packets may be processed to remove jitter or timing perturbations which may accumulate, for example, during transmission by switched bus structures and processing etc. In FIGURE 1 the program clock reference PCR, is read by demultiplexor 102 and coupled to synchronize clock oscillator 17, which has a nominal frequency of 27 MHz. The MPEG standard allows for an intermittent occurrence of the program clock reference PCR within transport stream. The resultant intermittent oscillator synchronization is fully adequate to permit MPEG decoding. However, the transport packet stream may be subject to timebase modulation, for example resulting from mobile transmission, causing signal flutter and mutlipath transmission reflections. Timebase modulation may also result from recording and replay buffering and mechanically instabilities. Such timebase variations or errors may exceed the oscillator synchronization range or rate of change, hence each transport packet is repackaged to form a superpacket containing a timestamp specific to the occurrence of the transport packet it contains. The provision of a timestamp for each transport packet permits the correction of unwanted timebase modulation and facilitates the delivery of each transport packet to the decoder at substantially the same time as the transport packet would have been decoded had it not been recorded and or perturbed.

FIGURE 2B illustrates a superpacket which comprises a control data header of 32 bits and a transport packet of either 188 bytes or 140 bytes representing respectively the GA or DirecTV™ systems signals. The control data header includes a 20 bit time stamp, 6 bits of copy control data, a 4 bit playback rate code and 2 bits of reserved data. The timestamp is a sample of an oscillator count taken at a specific instant, for example, at the occurrence of a frame clock pulse FC, and as described, may be utilized for the correction of timing jitter and perturbations impressed on each superpacket. The playback rate code may be used by a recording device to determine the rate at which a particular signal is to be recorded or played back. The playback rate is coded relative to the recording rate and is read and utilized by any recording devices connected to the AVD bus. The purpose of the playback rate code is to allow recording at a relatively high bit rate and playback at a normal bit rate. Copy control data comprises three 2 bit words which provide control of, digital copy control or CGMS-D, analog copy control or CGMS-A and control information for an analog APS system developed by MACROVISION™. Table 1 shows the allocation and function of 6 copy control data bits.

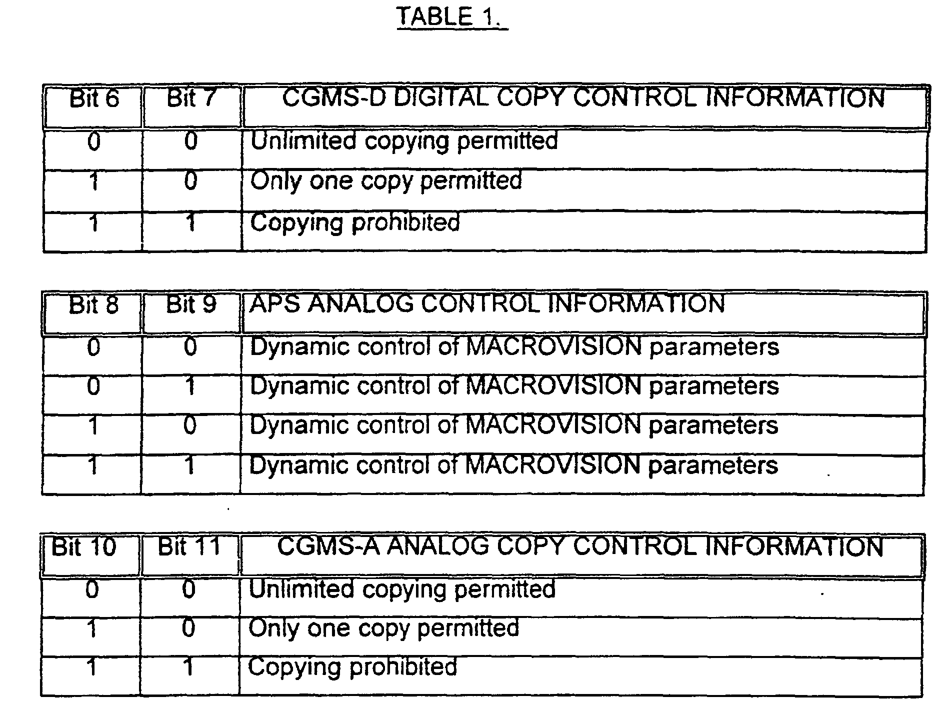

Various equipment system combinations may be envisioned comprising, for example, analog or digital recorder players, such equipment may present differing connection and control capabilities, and in addition operation in recording and or replay modes must be considered. These various combinations may be broadly separated into several exemplary systems.

FIGURE 1 depicts a first exemplary system where a digital receiver and display are coupled to a digital recorder by a simple data bus configuration. However, regardless of the data bus configuration, copy control or CGMS data must be recovered or demultiplexed from the selected packet stream and formatted for coupling to the recording or replicating device. The recorder or replicator must demultiplex or recover the formatted copy control bits and implement the control function specified therein. In FIGURE 1 copy control data is demultiplexed from the selected transport packet stream at block 104 and coupled to a copy control word generator at block 105. Superpackets are formatted at block 108 which combines the selected transport packet stream with the copy control word from block 105, a timestamp from block 107 and a playback rate code from block 106.

As already described the 6 bit copy control word provides for control of both digital and analog systems. Hence in the first exemplary system of FIGURE 1, demultiplexor block 30 of digital recorder 200, extracts the digital copy control or CGMS-D commands present as bits 6 and 7 of the superpacket header. Bits 6 and 7 define three states, namely, unlimited copying, no copying or only one copy permitted. Separated bits 6 and 7 are coupled to control block 208 which is controllably coupled to various subsystems of recorder 200. Clearly, if CGMS-D bits 6 and 7 indicate a first state which permits unlimited copying, no control action is required by controller 208 and copy 210 may be formed on medium 299.

When CGMS-D bits 6 and 7 indicate a second state which prohibits copying, controller 208 may disable record processor 206A by means of control line INH. In addition an electronic signal path, or EE mode, through the recorder may be inhibited responsive to copy prohibition by bits 6 and 7. Controller 208 may also cause the generation of an on-screen display message indicating the prohibited recording status of the user selected program. The on-screen display message may generated within recorder 200 or be caused to be generated within IRD 100.

Advantageously, integrated receiver decoder 100 may in demultiplex and interprit CGMS-D bits 6 and 7. Thus when a prohibited recording status is required, coupling of transport packets or superpackets to the serial data bus may be inhibited within IRD 100. In addition the interpreted status of the 6 copy control bits may be presented for user information as an on-screen display.

The third state defined by bits 6 and 7, namely one copy permitted, requires that the copy control bits be amended prior to or concurrent with replication by recorder 200. Thus CGMS-D command bit 7 of the superpacket header is changed, as indicated in table 1, from logical 0 to logical 1. In FIGURE 1 superpacket SP from demux 30 is coupled to block RESET CC 204 which amends the logical state of bit 7 responsive to control signal RS generated by controller 208. Hence a single copy 210 of the exemplary superpacket SP is replicated which contains a CGMS-D command prohibiting any further copying.

In a further advantageous control situation the copyright owner may establish a differential pricing structure where an exemplary live event may be priced higher for live viewing than for a time shifted, or non-real time viewing resulting from a recording of the live event. Thus CGMS-D bits 6 and 7 may indicate the third state permitting a single copy, with decoder inhibition signalled by, for example, at least one bit within the playback rate area or the reserved data bits. However, other copying or copyright control data resident in the users selected program stream may be demultiplexed at, for example block 104. Such filtered or demuxed control data from block 104. may be coupled to controller 111 to inhibit decryption by block 103, and or decoding at 109, of the received signal for immediate, real time viewing at display 99. In addition controller 111 may communicate this viewing inhibit command via the control conductor CRL of data bus 500 to recorder 200RP. Control commands from data bus 500 are coupled to controller 208 which inhibits, via signal INHPB, electronic or EE coupling of the input packet signal to the recorder output. Reproduction and output data generation of the recorded copy is facilitated, even though the copy comprises transport packets containing the embedded viewing inhibit command, because exemplary bit 7 of the copy control word was amended when recorded to prohibit further copying. Thus IRD 100 may logically compare the status of exemplary bits 6 and 7 with the embedded viewing inhibit command and deduce that the replay only copy may be decoded for non-real time viewing at display 99.

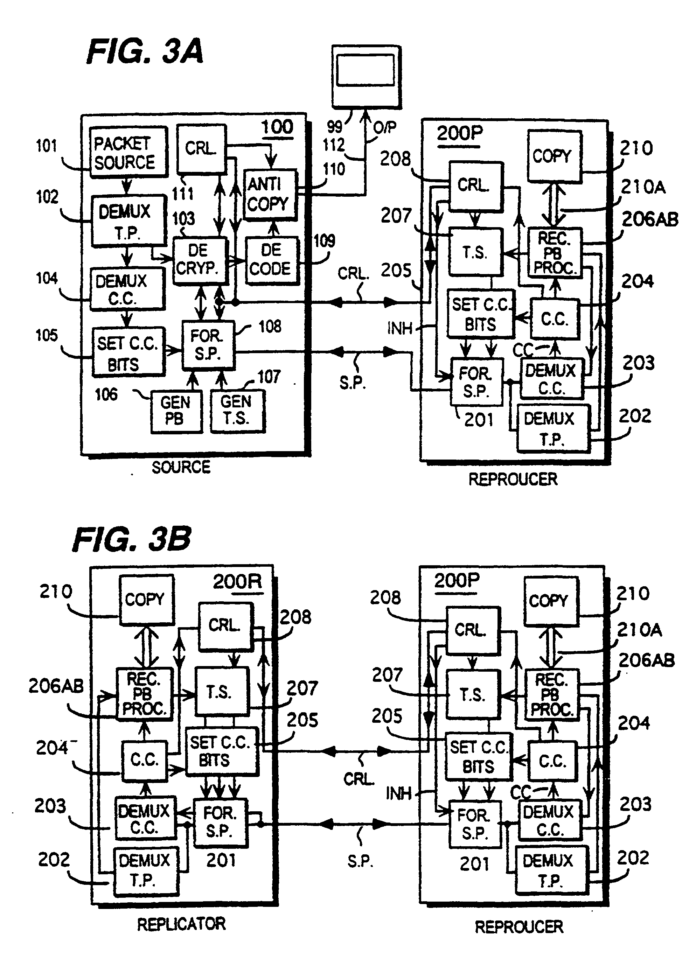

FIGURE 3A depicts as functional blocks a second exemplary system where a digital recorder player 200P is coupled to a digital receiver 100 and display 90 via a simple data bus configuration. Functional blocks of FIGURE 3A which provide the same function as those depicted in FIGURE 1 are similarly numbered. FIGURE 3A depicts the reproduction of copy 210, from an unshown medium, where copy 210 includes digital copy control or CGMS-D commands present in both the exemplary superpacket header and the transport packet.

The copy control bits define the three states described above. Clearly, if the copy control bits permit unlimited copying, no control response is required or initiated by reproducer 200P. The second and third copy control states preclude copying or permit only a single copy. However, since FIGURE 3A depicts digital reproduction of copy 210 from player 200P to digital receiver 100, and to display 99, once again no control response is required or initiated by reproducer 200P since receiver 100 is assumed incapable of replication.

However, FIGURE 3B depicts an interconnection between digital reproducer 200P and digital replicator 200R, which requires execution of copy control responses determined by the bits reproduced by reproducer 200P. Clearly in both FIGURES 3A and 3B, reproducer 200P transduces copy 210 for differing signal destinations and uses, namely decoding and viewing in FIGURE 3A and replication in FIGURE 3B. As described with respect to FIGURE 1, digital replicator 200R may demultiplex copy control bits from the exemplary superpacket, depicted at block 203 and communicate the required copy control action to controller 208. Thus as described for FIGURE 1, copying may be permitted, prohibited or a single copy allowed with that copy's respective copy control bit amended to prohibit further copying.

The differing signal destinations and consequential uses of transduced copy 210 may be advantageously determined by reproducer 200P by means of serial data control line CRL. For example, during reproduction of copy 210, demultiplexor 203 may extract and interprit CGMS-D bits 6 and 7 of the exemplary packet header. When bits 6 and 7 prohibit copying, controller 208 may poll via control line CRL to determine the destination of the transport packets or superpackets about to be coupled via the serial data bus.
Control via a data bus is well known and may be implemented in various forms, for example, controller 208 may generate a message requiring responses from all bus nodes thereby identifying apparatus coupled to the control bus. Thus transport packets or superpackets may be coupled for decoding and viewing but may be inhibited from bus coupling to a recording device. Alternatively controller 208 may specifically address the transport packets or superpackets to a non-replicating destination, for example decoder 100/109. Thus copy 210, with copying prohibited, may be coupled for decoding and viewing but may be inhibited from bus coupling responsive to a determination of the apparatus present on the bus, for example digital replicator 200R.

In the discussion of FIGURES 1. 3A and 3B, it was assumed that the recording or replicating devices are capable of demultiplexing the exemplary copy control word from the exemplary packet header. However, in replicating devices which may fail, or be incapable of demultiplexing copy control data, copy control management may be facilitated by means of the control line CRL. As discussed for FIGURE 1, copy control data may be filtered or demultiplexed from the selected program stream at block 104. The copy control data may be coupled to controller 111 for periodic bus transmission via control line CRL. Thus copy control data may be coupled to replicator controller 208 thereby facilitating the required copy management. In replicating devices incapable of amending the copy control bits when required by single copy authorization, the replicating device will transmit via the control line the correct copy control data, namely copying prohibited. The control line copy control data will be transmitted periodically, for example at least once per second. When a replicating device determines a difference between copy control data received via control line CRL and that demuxed from the packet header, the device inhibits recording or replication. However, in the eventuality that copy control data is absent from control line CRL for a predetermined time period, for example 10 seconds, the packet header CGMS data is then assumed correct and copy management is facilitated.

Figure 4 depicts an analog recorder/ replicator 300 coupled to an analog signal AS, decoded from a digital signal source by integrated receiver decoder 100. An analog taping flag is demultiplexed, for example by block 104, from an exemplary DSS™ electronic program guide. The demuxed taping or copy control data is coupled to controller 111 which in turn invokes the required copy management control by means of anti-copying device 110, for example a MACROVISION™ apparatus. As shown in Table 1, analog CGMS-A provides the same three copying conditions as CGMS-D, namely, unlimited copying, copying prohibited and one copy permitted.

In the unlimited copying condition analog output signal AS passes through anti-copy block 110 without signal modification or addition. When copying is prohibited, anti-copy block 110 modifies the decoded analog signal AS such as to render a copy unusable but still permit direct viewing of the decoded analog signal on display 99. The third control condition, namely one copy only, requires that analog signal AS be modified prior to copying to indicate that copy contains material for which copying is prohibited. The recording prohibition may be encoded during a vertical blanking interval of the analog signal, for example by use of line 21. In FIGURE 4 the demultiplexed CGMS-A may be encoded as described on exemplary line 21 of the vertical blanking interval or signal AS. When analog signal AS is received by replicator 300 line 21 is demultiplexed at block 301. When the third copy management condition is read from the copy control data controller 311 enables multiplexor adder 302 which modifies the data on line 21 to reflect a recording prohibited status.

## Claims

1. Apparatus for processing digital video and control data occurring in transport packets (101A, 210A), **characterized by**:
means (104, 203) responsive to said source for deriving copy control data (CC) from said transport packets (101A, 210A); and,
means (111, 208) responsive to said copy control data (104A, CC) for enabling coupling of said transport packets to a data bus (500) for transmission and copying, wherein in a first condition said copy control data is representative of copying permitted and coupling of said transport packets to said bus is enabled, and in a second condition said copy control data is representative of copying prohibited and coupling of said transport packets to said bus is disabled.

2. Apparatus of claim 1, wherein in said first condition said copy control data (104A, CC) is representative of copying permitted and said control means (111) disables transport packet signal decoding.

3. Apparatus according to claim 1, **characterized by**:
control means (208) coupled to said bus for determining a replicating apparatus (200R) presence at a destination on said bus and responsive to said copy control data (CC) controlling coupling of said transport packets to said destination,
wherein said copy control data being representative of copying prohibited and, in a first condition said control means (208) determines a presence of the replicating apparatus at said destination said control means (208) inhibits coupling of said transport packets to said destination, and in a second condition said control means (208) determines an absence of said replicating apparatus said control means (208) enables coupling of said transport packets to said destination.

## Patentansprüche

1. Vorrichtung zur Verarbeitung von digitalen Video- und Steuerdaten, die in Transportpaketen (101A, 210A) auftreten,
**gekennzeichnet durch:**
Mittel (104, 203), die auf die Quelle ansprechen, zur Ableitung von Kopie-Steuerdaten (CC) aus den Transportpaketen (101A, 210A) und
Mittel (111,208), die auf die Kopie-Steuerdaten (104A, CC) ansprechen, zur Ermöglichung der Zuführung der Transportpakete zu einem Datenbus (500) für die Übertragung und Kopierung, wobei in einem ersten Zustand die Kopie-Steuerdaten eine Erlaubnis der Kopierung darstellen und die Übertragung der Transportpakete zu dem Bus ermöglicht wird, und in einem zweiten Zustand die Kopie-Steuerdaten ein verbotenes Kopieren darstellen und die Zuführung der Transportpakete zu dem Bus gesperrt wird.

2. Vorrichtung nach Anspruch 1, wobei in dem ersten Zustand die Kopie-Steuerdaten (104A, CC) ein erlaubtes Kopieren darstellen und die Steuermittel (111) die Transportpaket- Signaldecodierung sperren.

3. Vorrichtung nach Anspruch 1, **gekennzeichnet durch**:
mit dem Bus verbundene Steuermittel (208) zur Bestimmung einer Replikationsvorrichtung (200R)-Anwesenheit bei einer Bestimmung auf dem Bus und ansprechend auf die Kopie-Steuerdaten (CC), die die Zuführung der Transportpakete zu der Bestimmung steuern,
wobei die Kopie-Steuerdaten eine verbotene Kopierung darstellen und in einem ersten Zustand die Steuermittel (208) eine Anwesenheit der Replikationsvorrichtung bei der Bestimmung bilden, die Steuermittel (208) die Zuführung der Transportpakete zu der Bestimmung verhindern und wenn in einem zweiten Zustand die Steuermittel (208) eine Abwesenheit der Replikationsvorrichtung ermitteln, die Steuermittel (208) die Zuführung der Transportpakete zu der Bestimmung ermöglichen.

## Revendications

1. Appareil pour traiter des données numériques vidéo et de contrôle apparaissant dans des paquets de transport (101A, 210A), **caractérisé par**
un moyen (104, 203) répondant à ladite source pour dériver des données de contrôle de la copie (CC) desdits paquets de transport (101A, 210A) ; et
un moyen (111, 208) répondant auxdites données de contrôle de la copie (104A, CC) pour permettre de coupler lesdits paquets de transport à un bus de données pour transmission et copie, dans lequel selon une première condition lesdites données de contrôle de la copie sont représentatives d'une copie autorisée et le couplage desdits paquets de transport audit bus est permis, et selon une seconde condition lesdites données de contrôle de la copie sont représentatives d'une copie interdite et le couplage desdits paquets de transport audit bus est empêché.

2. Appareil selon la revendication 1, dans lequel selon ladite première condition lesdites données de contrôle de la copie (104A, CC) sont représentatives d'une copie autorisée et ledit moyen de contrôle (111) empêche le décodage du signal de paquet de transport.

3. Appareil selon la revendication 1, **caractérisé par** :
un moyen de contrôle (208) couplés audit bus pour déterminer la présence d'un appareil de réplication (200R) à une destination sur ledit bus et en réponse auxdites données de contrôle de la copie (CC), contrôler le couplage desdits paquets de transport à ladite destination,
dans lequel lorsque les données de contrôle de la copie sont représentatives d'une copie interdite et, dans une première condition selon laquelle ledit moyen de contrôle (208) détermine la présence d'un appareil de réplication à la destination, ledit moyen de contrôle inhibe le couplage desdits paquets de transport à ladite destination, et dans une seconde condition selon laquelle ledit moyen de contrôle (208) détermine une absence dudit appareil de réplication, ledit moyen de contrôle permet le couplage desdits paquets de transport à ladite destination.
